Europäisches Patentamt

European Patent Office

Office européen des brevets

(11) Publication number: **0 388 969**
**A2**

# EUROPEAN PATENT APPLICATION

(21) Application number: **90105537.6**

(22) Date of filing: **23.03.90**

(51) Int. Cl.5: **C08L 81/02, C08J 5/04**

(30) Priority: **23.03.89 US 327972**

(43) Date of publication of application:
**26.09.90 Bulletin 90/39**

(84) Designated Contracting States:
**AT BE CH DE ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Efner, Howard Franklin**
**2100 Jefferson Rd.**
**Bartlesville, OK 74006(US)**
Inventor: **Stone, Mark Lee**
**305 Eastview Dr.**
**Idaho Falls, ID 83401(US)**
Inventor: **Wright, Roy Franklin**
**2076 Southview**
**Bartlesville, OK 74003(US)**

(74) Representative: **Geissler, Bernhard, Dr.jur.,**
**Dipl.-Phys. et al**
**Patent- u. Rechtsanwälte Bardehle**
**-Pagenberg-Dost-Altenburg**
**-Frohwitter-Geissler & Partner Postfach 86 06**
**20 Galileiplatz 1**
**D-8000 München 80(DE)**

(54) Composites having reduced microcracking and methods of making the same.

(57) Reinforced plastic composites having reduced microcracking formed of continuous fibrous reinforcing material and matrices of poly(arylene sulfide)-poly(aromatic sulfide/sulfone) resin mixtures and pultrusion methods of producing such composites are provided.

EP 0 388 969 A2

# COMPOSITES HAVING REDUCED MICROCRACKING AND METHODS OF MAKING THE SAME

## Background Of The Invention

### 1. Field Of The Invention

The present invention relates to reinforced plastic composites comprised of continuous fibers and a resin matrix which includes poly(arylene sulfide), and pultrusion methods of making such composites.

### 2. Description of the Prior Art

Reinforced poly(arylene sulfide) composites are highly suitable for forming a variety of parts and objects. Because of their outstanding chemical, heat and electric insulation resistance as well as their superior rigidity when compared to other thermoplastics, poly(arylene sulfide) resins have found favor for forming reinforced plastic composites.

The production of reinforced plastic composites utilizing poly(arylene sulfide) resin by pultrusion is well established. In the pultrusion method, one or more continuous strands of fibrous reinforcing material are impregnated with resin, such as by pulling the strands through a poly(arylene sulfide) resin bath. The impregnated strands are pulled through a heated forming die wherein consolidation of the resin and fibers takes place and a composite of desired cross-sectional shape is formed. The pulling mechanism located in the system downstream of the heated forming die causes the strands of continuous fibers to be forwarded through the system and to further processing, such as an apparatus for cutting the composite into articles of desired length.

The continuous fibers forming the strands used in producing reinforced poly(arylene sulfide) composites are usually selected from glass fibers, carbon fibers, or aramid fibers. Some of such fibers, however, present special pro blems because they exhibit anisotropic thermal expansion. For example, with increasing temperatures, long carbon fibers expand negligibly in the longitudinal direction, but have substantial diametrical expansion. When such carbon fibers are utilized to reinforce poly(arylene sulfide) compositions, temperature cycling causes microcracking in the resin matrix because of the differing degrees of expansion of the carbon fibers and surrounding poly(arylene sulfide) resin matrix. This microcracking is particularly evident in laminated composites since greater stresses are set up between adjacent composite layers and the fibers therein which are generally positioned non-parallel to each other. Microcracks extending from the carbon fibers into the resin matrix of a composite result in structural discontinuities and a reduced integrity which contribute to strength reduction and provide permeability for liquid absorption which in turn causes deterioration in composite strength. Such microcracks, which in a laminate are typically up to a few microns wide and extend through the thickness of each ply, are conventionally observed by cutting a laminate, polishing the cut surface and observing the surface microscopically.

By the present invention reinforced plastic composites formed with resin matrices comprised of major portions of poly(arylene sulfide) and minor portions of poly(aromatic sulfide/sulfone) are provided. The composites have reduced microcracking and a reduced susceptibility to microcracking. Pultrusion methods of forming such composites are also provided.

## Summary of the Invention

Reinforced plastic composites having reduced microcracking and a reduced susceptibility to microcracking are provided. The composites are comprised of continuous strands of fibrous reinforcing material in thermoplastic resin matrices. The thermoplastic resin matrices are comprised of mixtures of major portions of poly(arylene sulfide) resin and minor portions of poly(aromatic sulfide/sulfone) resin. The composites can be multi-ply laminates wherein the fibers in adjacent plies are parallel or non-parallel.

A preferred composite is comprised of continuous carbon fibers in a matrix of a poly(phenylene sulfide)-poly(phenylene sulfide/sulfone) resin mixture wherein the weight ratio of the poly(phenylene sulfide) to poly(phenylene sulfide/sulfone) is in the range of from about 9:1 to about 2:1. The carbon fibers are preferably present in the composite in the range of from about 40% to about 70% by weight, with the poly-(phenylene sulfide)-poly(phenylene sulfide/sulfone) resin mixture being present therein in an amount in the range of from about 30% to about 60% by weight.

Methods of producing composites having reduced microcracking and reduced susceptibility to microcracking are also provided. Such methods are comprised of pulling one or more continuous strands of fibrous reinforcing material impregnated with the thermoplastic resin mixture described above through a heated forming die having a temperature such that the thermoplastic resin reaches the molten state and a fiber reinforced plastic composite is formed. The continuous composite formed can be cut into panels or sections which can in turn be pressure molded at elevated temperatures to form multi-ply laminates therefrom.

It is, therefore, an object of the present invention to provide reinforced poly(arylene sulfide)-containing composites having reduced microcracking and reduced microcracking susceptibility as well as methods of making such composites.

Other and further objects, features and advantages of the present invention will be readily apparent to those skilled in the art upon a reading of the description of preferred embodiments which follows.

Description of Preferred Embodiments

The reinforced plastic composites of this invention which have reduced microcracking and a reduced susceptibility to microcracking are comprised of one or more continuous strands of fibrous reinforcing material in a thermoplastic resin matrix, the thermoplastic resin being comprised of a mixture of a major portion of poly(arylene sulfide) resin and a minor portion of poly(aromatic sulfide/sulfone) resin. The reinforced plastic composite can take a variety of shapes such as bars, tapes, and sheets as well as high pressure and temperature molded multi-ply laminates made from sections or panels of such bars, tapes or sheets.

The term "poly(arylene sulfide) resin" is used herein to broadly designate a thermoplastic resin comprised of arylene sulfide polymers whether homopolymers, copolymers, terpolymers, and the like, or a blend of such polymers. Poly(arylene sulfide) resins which are suitable for use in accordance with the present invention are those described in U.S. Patents Nos. 3,354,129 issued Nov. 21, 1967; 3,919,177 issued Nov. 11, 1975; 4,038,261 issued July 26, 1977; and 4,656,231 issued April 7, 1987; which patents are incorporated herein by reference.

Of the various poly(arylene sulfide) resins which can be utilized, poly(phenylene sulfide) resins are most preferred. Particularly preferred commercially available poly(phenylene sulfide) resins are those manufactured by Phillips Petroleum Company of Bartlesville, Oklahoma, and marketed as RYTON®S poly-(phenylene sulfide) resins having melt flows of from about 10 to about 1000 grams per 10 minutes as determined by ASTM D1238, condition 317/5.

The term "poly(aromatic sulfide/sulfone) resin" is used herein to broadly designate a thermoplastic resin comprised of aromatic sulfide/sulfone polymers as described in U.S. Patent No. 4,016,145 issued April 5, 1977 and U.S. Patent No. 4,127,713 issued Nov. 28, 1978, which patents are incorporated herein by reference. The aromatic sulfide/sulfone polymers of increased molecular weight produced in accordance with the process of U.S. Patent No. 4,127,713 are preferred. Such polymers are produced by contacting at least one dihalo aromatic sulfone, at least one alkali metal sulfide, at least one organic amide, at least one sodium carboxylate, and a sufficient amount of water to produce higher molecular weight polymers than are normally produced. A preferred such poly(aromatic sulfide/sulfone) polymer for use in accordance with the present invention is poly(phenylene sulfide/sulfone). Particularly preferred commercially available poly-(phenylene sulfide/sulfone) resins are those manufactured by Phillips Petroleum Company, and marketed as RYTON®S poly(phenylene sulfide/sulfone) resins having melt flows of from about 2 to about 500 grams per 10 minutes as determined by ASTM D1238, condition 343/5.

The poly(arylene sulfide)-poly(aromatic sulfide/sulfone) resin mixtures which are useful in accordance with the present invention are those wherein the weight ratio of poly(arylene sulfide) resin to poly(aromatic sulfide/sulfone) resin is in the range of from about 30:1 to about 1:30. Such resin mixture is generally present in the reinforced plastic composites of this invention in an amount in the range of from about 20% to about 90% by weight with the fibrous reinforcing material therein being present in an amount in the range of from about 10% to about 80% by weight. The term "% by weight" is used herein to mean the weight percent of a particular component in a composite based on the total weight of all of the components making up the composite.

A particularly preferred thermoplastic resin mixture for forming composites having reduced microcracking and reduced susceptibility to microcracking is comprised of poly(phenylene sulfide) resin and poly-(phenylene sulfide/sulfone) resin present in the mixture in a weight ratio, respectively, in the range of from about 9:1 to about 2:1, most preferably in a weight ratio of about 3:1. The poly(phenylene sulfide)-poly-(phenylene sulfide/sulfone) resin mixture is preferably present in the composite in an amount in the range of from about 30% to about 60% by weight with the fibrous reinforcing material being present therein in an amount in the range of from about 40% to about 70% by weight.

The preferred poly(phenylene sulfide)-poly(phenylene sulfide/sulfone) resin mixture described above will generally have a melting point in the range of from about 240°C to about 290°C, and will have a melt flow in the range of from about 5 to about 300 grams per 10 minutes as determined by ASTM D1238, condition 317/5.

The fibrous reinforcing material included in the composites can be selected from glass fibers, carbon fibers and aramid fibers, with carbon fibers being the most preferred. The fibers can be present in the thermoplastic resin matrix in the form of one or more individual strands or rovings, i.e., bundles, of fibers. The individual fibers in a strand will typically have a diameter in the range of from about 4 to about 10 microns and the strands or rovings can contain anywhere from about 1000 to about 12,000 fibers.

In producing a reinforced plastic composite having reduced microcracking and susceptibility to microcracking, a thermoplastic resin mixture is formed comprised of poly(arylene sulfide) resin and poly-(aromatic sulfide/sulfone) resin in the proportions described above. Many suitable methods of mixing the components are well known to those skilled in the art. For example, the resin components can be mixed together at room temperature in a rotating drum blender, or in an intensive mixer such as a Henschel mixer to form a homogeneous mixture. An aqueous slurry of the thermoplastic resin mixture in particle form can be prepared for slurry impregnation of the reinforcing fibers. Generally, the particles in the slurry should have an average particle size, based on weight, of from about 2 microns to about 50 microns. The slurry is agitated and surfactant is added if required in order to provide a uniform dispersion. In a pultrusion process well known to those skilled in the art, the reinforcing fibers are pulled through the slurry in a manner whereby the resin mixture is picked up by the fibers forming impregnated wet fiber strands which are then at least partially dried and pulled through a hot forming die. The temperature in the forming die is sufficiently high for the resin mixture to reach the molten state and form a matrix, generally from 5°C to about 100°C higher than the softening point of the resin mixture. The heated die has a cross-sectional dimension such that as the impregnated strands of fiber reinforcing material are pulled therethrough, the thermoplastic resin mixture is fused into a continuous matrix around the fibers. The resulting compo site contains continuous unidirectionally aligned fibers, and depending upon the shape of the heated forming die can be produced in the form of a bar, tape or sheet. The continuously pultruded composite is generally pulled through a cutting apparatus whereby it is cut into articles of desired length. Multi-ply laminated composites can be formed from the single ply articles in a heated press mold.

The presence of a minor amount of poly(aromatic sulfide/sulfone) resin with a major amount of poly-(arylene sulfide) resin in the matrices of coposites of this invention causes the composites to have reduced microcracking and to be less susceptible to the formation of microcracks therein as a result of temperature cycling.

The following example is presented to further illustrate the composites and methods of this invention. The particular species and conditions employed in the example are intended to be illustrative of the invention and not limiting thereto.

## Example

A prepreg was prepared by pulling a plurality of carbon fiber strands through an agitated aqueous slurry of 75% by weight poly(phenylene sulfide) resin (Phllips Petroleum Co. RYTON® having a melt flow of about 60 grams per 10 minutes as determined by ASTM D1238, condition 317/5) and 25% by weight poly-(phenylene sulfide/sulfone) resin (Phillips Petroleum Co. RYTON®S having a melt flow of about 10 grams per 10 minutes as determined by ASTM D1238, condition 343/5).

The impregnated strands were then pulled through a dryer to drive off the water diluent, through an over and under die to preshape the impregnated strands, and through a heated forming die at 630°F. The die had a cross-sectional shape such that the composite produced was in the form of a 0.5 inch wide x 0.010 inch thick tape. The tape was cut into 5-inch long segments.

Eight of the composite segments were pressed into a 0.5 inch x5 inch laminate using a press temperature of 650° F, and a cycle consisting of a 4-minute preheat, 3 minutes at 400 psi, and a 3-minute quench at 400 psi. A portion of the laminate was then annealed for 2 hours at 400° F.

A laminate was also prepared for comparison by the same procedure using a resin matrix comprised of only poly(phenylene sulfide). The pressing cycle was carried out at 150 psi rather than 300 psi, and the laminate formed was annealed for 2 hours at 400° F.

The various laminates were then cut, the cut surfaces polished, and the polished surfaces were studied microscopically using directed reflected light to determine the number of microcracks per inch per layer in the laminated composites. The results of these tests are given in Table I below. The number of microcracks per inch per layer were counted for two different sections of each sample.

TABLE I

| Type of Resin Matrix | Treatment | Number of Microcracks per inch per layer |
|---|---|---|
| poly(phenylene sulfide) | quenched and annealed | 36,29 |
| poly(phenylene sulfide | quenched only | 5,5 |
| poly(phenylene sulfide/sulfone mixture | quenched and annealed | 3,0 |

It can be seen from Table I that the use of the resin mixture of the present invention resulted in far fewer microcracks even after annealing as compared to a composite with a resin matrix comprised only of poly(phenylene sulfide).

The present invention, therefore, is well adapted to carry out the objects and attain the ends and advantages mentioned as well as those inherent therein. While numerous changes may be made by those skilled in the art, such changes are encompassed within the scope of the invention as defined by the appended claims.

**Claims**

1. A reinforced plastic composite comprised of at least one continuous strand of fibrous reinforcing material in a thermoplastic resin matrix, said thermoplastic resin being comprised of a mixture of poly-(arylene sulfide) resin and poly(aromatic sulfide/sulfone) resin.

2. The composite of claim 1 wherein said poly(arylene sulfide) resin and said poly(aromatic sulfide/sulfone) resin are present in said mixture in a weight ratio, respectively, in the range of from about 30:1 to about 1:30.

3. The composite of claim 1 or 2 wherein said thermoplastic resin mixture is present in said composite in an amount in the range of from about 20% to about 90% by weight, and said fibrous reinforcing material is present therein in an amount in the range of from about 10% to about 80% by weight.

4. The composite of one of claims 1-3 wherein said poly(arylene sulfide) resin is poly(phenylene sulfide).

5. The composite of one of claims 1-3 wherein said poly(aromatic sulfide/sulfone) resin is poly-(phenylene sulfide/sulfone).

6. The composite of claim 4 and 5 wherein said poly(phenylene sulfide) resin and said poly(phenylene sulfide/sulfone) resin are present in said mixture in a weight ratio, respectively, in the range of from about 9:1 to about 2:1.

7. The composite of one of claims 1-6 wherein said thermoplastic resin mixture is present in said composite in an amount in the range of from about 30% to about 60% by weight, and said fibrous reinforcing material is present therein in an amount in the range of from about 40% to about 70% by weight.

8. A method of producing a reinforced plastic composite having reduced microcracking comprising pulling at least one continuous strand of fibrous reinforcing material impregnated with a thermoplastic resin through a heated forming die having a temperature such that said thermoplastic resin reaches the molten state and a fiber reinforced plastic composite is formed, said thermoplastic resin and said fibrous reinforcing material being as defined in one of claims 1 to 7.

9. A fiber reinforced plastic composite having reduced microcracking produced in accordance with the method of claim 8.